(19) Europäisches Patentamt / European Patent Office / Office européen des brevets

(11) EP 4 759 852 A1

(12) **EUROPEAN PATENT APPLICATION**

(43) Date of publication:
**17.06.2026 Bulletin 2026/25**

(21) Application number: **24218972.8**

(22) Date of filing: **11.12.2024**

(51) International Patent Classification (IPC):
***C08G 18/20*** *(2006.01)* ***C08G 18/28*** *(2006.01)*
***C08G 18/32*** *(2006.01)* ***C08G 18/42*** *(2006.01)*
***C08G 18/72*** *(2006.01)* ***C08G 18/73*** *(2006.01)*
***C08G 18/77*** *(2006.01)* ***C08G 18/78*** *(2006.01)*
***C08G 18/79*** *(2006.01)*

(52) Cooperative Patent Classification (CPC):
**C08G 18/2081; C08G 18/2825; C08G 18/283; C08G 18/3206; C08G 18/4277; C08G 18/722; C08G 18/73; C08G 18/771; C08G 18/7837; C08G 18/792**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Covestro Deutschland AG**
**51373 Leverkusen (DE)**

(72) Inventors:
- **Darmandeh, Heidar**
  **40597 Düsseldorf (DE)**
- **Richter, Frank**
  **51373 Leverkusen (DE)**
- **Latorre Martinez, Irene Cristina**
  **40764 Langenfeld (DE)**
- **Pires, Raul**
  **50670 Köln (DE)**

(74) Representative: **Levpat**
**c/o Covestro AG**
**Gebäude K12**
**51365 Leverkusen (DE)**

(54) **COMPOSITIONS BASED ON RENEWABLE RAW MATERIALS AND THEIR USE IN POLYURETHANE APPLICATIONS**

(57) The invention relates to compositions comprising a NCO-reactive component and a polyisocyanate composition comprising at least one isocyanurate structure and at least one allophanate structure, which is based on sugar based diisocyanates and which has a low content of residual monomeric isocyanates. Moreover, the invention relates to the use of these compositions in the synthesis of coatings, adhesives and sealants, to the coatings, adhesives and sealants themselves and to substrates comprising the inventive coating compositions or coatings.

EP 4 759 852 A1

## Description

The invention relates to compositions comprising a NCO-reactive component and a polyisocyanate composition comprising at least one isocyanurate structure and at least one allophanate structure, which is based on sugar based diisocyanates and which has a low content of residual monomeric isocyanates. Moreover, the invention relates to the use of these compositions in the synthesis of coatings, adhesives and sealants, to the coatings, adhesives and sealants themselves and to substrates comprising the inventive coating compositions or coatings.

Monomeric diisocyanates are practically not used as crosslinkers in polyurethane systems due to their volatility and toxicological properties. Usually higher molecular weight derivatives are used, modified for example with isocyanurate, iminooxadiazinedione, uretdione, urethane or allophanate groups. An overview of these polyisocyanates and their production method is exemplified in Laas et al., J. Prakt. Chem. 336, 1994, 185-200.

The oligomerization or polymerization of monomeric diisocyanates, especially to form higher molecular weight oligomer mixtures, has long been known. The reaction of a relatively small number of isocyanates with one another is referred to as oligomerization. The reaction of a relatively large number of isocyanates is referred to as polymerization. All products resulting from such processes are referred to collectively in this document as oligomeric/polymeric polyisocyanates.

Monomeric isocyanates formed from renewable raw materials and their higher molecular weight derivatives are playing an ever greater part not least, quite simply, for reasons of sustainability and also for reasons of cost.

This explains, inter alia, the development of diisocyanates based on renewable and inexpensive sugars, such as 1:4-3:6 dianhydrohexitols i.e. such as (3R,3aR,6S,6aR)-, (3S,3aR,6S,6aR)- and (3R,3aR,6R,6aR)-3,6-diisocyanato-2,3,3a,5,6,6a-hexahydrofuro[3,2-b]furan for example (J. Thiem et al., Macromol. Chem. Phys. 202, 3410-3419, 2001.

It was an object of the present invention to provide compositions based on renewable raw materials, with short chemical and physical drying times, even at low temperatures and without using a catalyst. The latter is advantageous regarding industrial hygiene, since many of the catalysts commonly used in polyurethane chemistry are more or less toxic.

Moreover it was an object of the present invention to provide compositions based on renewable raw materials, leading to coatings, adhesives and sealants with good mechanical properties, as e.g. a high pendulum hardness, and with a good chemical resistance.

These objects have been achieved by a composition comprising

A) a polyisocyanate composition comprising at least one isocyanurate structure and at least one allophanate structure, obtainable or obtained by a process comprising

reacting a composition ($C_{A'}$), comprising

A1) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan,

A2) at least one alcohol with an OH-functionality of ≥ 1
and

A3) optionally at least one diisocyanate, different from the diisocyanate/s of component A1),

wherein the equivalent ratio of OH-groups of component A2) to NCO-groups of components A1) and A3) is 0.05:1 to 0.25 :1,

to form a raw polyisocyanate composition,

and subjecting the raw polyisocyanate composition to a distillation, preferably to a thin film distillation, a short path distillation and/or a falling film distillation, in order to at least partially remove unreacted moieties of components A1), A2) and A3) to obtain the polyisocyanate composition comprising at least one isocyanurate structure and at least one allophanate structure,

and

B) at least one NCO-reactive compound.

WO2011/000587 describes the synthesis of higher molecular weight derivates of (3R,3aR,6S,6aR)-,

(3S,3aR,6S,6aR)- and (3R,3aR,6R,6aR)-3,6-diisocyanato-2,3,3a,5,6,6a-hexahydrofuro[3,2-b]furan and their use in polyurethane applications. This document does not focus on the synthesis of polyisocyanates, which comprise both allophanate and isocyanurate structures. There is no information about the minimum ratio of OH- to NCO-groups in which the alcohols and diisocyanates have to be reacted and no hint that this minimum ratio is essential with regard to the purification by distillation. As apparent from example "Polyisocyanate 9" of the present document polyisocyanates which comprise isocyanurate and allophanate structures and are based on the above mentioned sugar-based diisocyanates cannot be purified via technically relevant methods like thin-film-evaporation if they are synthesized in a ratio of OH- to NCO-groups which is lower than the claimed one. However, for reasons of industrial hygiene it is important to use purified polyisocyanates with a low residual monomeric content in compositions that are to be used in polyurethane applications.

Accordingly WO2011/000587 does not disclose purified polyisocyanates comprising allophanate and isocyanurate groups, which are derived from renewable raw materials. Furthermore, this document does not suggest that these polyisocyanates in particular would lead to compositions that have short drying times and result in coatings, adhesives and sealants with good mechanical properties and a good chemical resistance.

The references to "comprising", "containing", etc. preferably denote "substantially consisting of" and very particularly preferably denote "consisting of". In the present invention, any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

Isocyanurate structures (also referred to as isocyanurate groups) are understood as structural units of the following general formula:

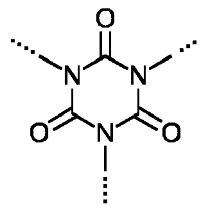

Isocyanurate structure

Allophanate structures (also referred to as allophanate groups) are understood as structural units of the following general formula:

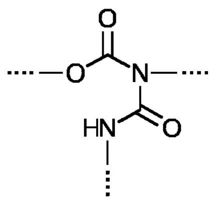

Allophanate structure

<u>Component A): a polyisocyanate composition comprising at least one isocyanurate structure and at least one allophanate structure</u>

<u>Composition ($C_{A'}$), comprising components A1), A2)and optionally A3) and its reaction:</u>

According to this invention, (3R,3aR,6S,6aR)-3,6-diisocyanato-2,3,3a,5,6,6a-hexahydrofuro[3,2-b]furan is referred to "ISODI", (3S,3aR,6S,6aR)-3,6-diisocyanato-2,3,3a,5,6,6a-hexahydrofuro[3,2-b]furan is referred to "IDDI" and (3R,3aR,6R,6aR)-3,6-diisocyanato-2,3,3a,5,6,6a-hexahydrofuro[3,2-b]furan is referred to "IMANDI".

The precursors for the synthesis of ISODI and IDDI can be obtained from different sources but are preferably obtained from a biobased source.

Optionally the composition ($C_{A'}$) containing component A1) may comprise at least one further diisocyanate, different from the diisocyanate/s of component A3).

These diisocyanates are aromatic, araliphatic, aliphatic or cycloaliphatic diisocyanates. Preference is given to monomeric diisocyanates, such as pentamethylene diisocyanate (PDI), hexamethylene diisocyanate (HDI), 2-methylpentane 1,5-diisocyanate, 2,2,4-trimethylhexane 1,6-diisocyanate, 2,4,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI) and/or 1,3- and 1,4-bis(isocyanatomethyl)cyclohexane

(H6XDI).

The amount of the optional further diisocyanates A3) is guided by the specific application and, if they are used at all, may vary within wide limits. They are used in amounts of preferably 0 to 5 % by weight, more preferably 0 to 2 % by weight, even more preferably 0 to 1 % by weight, based on the total amount of compounds that have NCO groups. It is however most preferred that their amount is 0, i.e. that only component A1) is used.

It is irrelevant by which processes the above mentioned diisocyanates are generated, i.e. with or without use of phosgene. Preferred in the industrial production of the isocyanates is the phosgenation in the liquid-phase or the gas-phase and even more preferred by gas-phase phosgenation as described for example in EP 0 764 633 A2. ISODI, IDDI and IMANDI are preferably prepared from the respective diamines.

Component A2) comprises at least one alcohol with an OH-functionality of ≥ 1. This at least one alcohol with an OH-functionality of ≥ 1 is selected from the group consisting of

$A2_1$) monomeric alcohols with an OH-functionality of≥ 1 (also referred to as monomeric monohydroxy-functional or polyhydroxy-functional alcohols),

$A2_2$) polymeric alcohols with an OH-functionality of 1 (also referred to as polymeric monohydroxy-functional alcohols), and

$A2_3$) polymeric alcohols with an OH-functionality of > 1 (also referred to as polymeric polyhydroxy-functional alcohols).

In an preferred embodiment the monomeric monohydroxy-functional alcohols of component $A2_1$) are compounds with a molecular weight of 32.04 g/mol to 250 g/mol, the chains of which can be saturated or unsaturated, linear or branched, aliphatic or cycloaliphatic or aromatic. More preferably the carbon chains have 1 to 12 carbon atoms.

Examples of suitable alcohols of component $A2_1$) are methanol, ethanol, n-propanol, isopropanol, n-butanol, n-hexanol, 2-ethyl-1-hexanol, ethylene glycol, propylene glycol, the isomeric butanediols, 2-ethyl-1,3-hexanediol or glycerin, ether alcohols, such as 1-methoxy-2-propanol, 3-ethyl-3-hydroxymethyloxetane, tetrahydrofurfuryl alcohol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol and dipropylene glycol, ester alcohols, such as ethylene glycol monoacetate, propylene glycol monolaurate, glycerol mono- and diacetate, glycerol monobutyrate or 2,2,4-trimethyl-1,3-pentanediol monoisobutyrate, unsaturated alcohols such as allyl alcohol, 1,1-dimethylallyl alcohol or olein alcohol, and araliphatic alcohols such as benzyl alcohol.

In a preferred embodiment the polymeric monohydroxy-functional alcohols $A2_2$) are polyether monools. The alcohols of component $A2_2$) preferably have a hydroxyl number of 3 to 1000 mg KOH/g, preferably 50 to 200 mg KOH/g, measured according to DIN 53240-3:2016-03. The alcohols of component $A2_2$) preferably have a number average molecular weight Mn in a range from 62 to 18 000 g/mol, particularly preferably from 62 to 4000 g/mol.

Polyether monools can be prepared by catalytic addition of one or more alkylene oxides to H-functional starter compounds. Alkylene oxides with 2 to 24 carbon atoms can be used as alkylene oxides (epoxides). Preference is given to styrene oxide, ethylene oxide, propylene oxide, tetrahydrofuran, butylene oxide and epichlorohydrin. Also mixtures of these starters can be used.

For the purpose of this invention "H-functional" denotes a starter compound that has H atoms that are active towards alkoxylation. The H-functional starter compounds are monofunctional for the production of polyether monools. Alcohols, amines, thiols and carboxylic acids can be used as such compounds. Examples of preferred monofunctional alcohols are methanol, ethanol, 1-propanol, 2-propanol, 1-butanol, 2-butanol, tert-butanol, 3-buten-1-ol, 3-butyn-1-ol, 2-methyl- 3-buten-2-ol, 2-methyl-3-butyn-2-ol, propyl alcohol, 2-methyl-2-propanol, 1-tert-butoxy-2-propanol., 1-pentanol, 2-pentanol, 3 - Pentanol, 1-hexanol, 2-hexanol, 3-hexanol, 1-heptanol, 2-heptanol, 3-heptanol, 1-octanol, 2-octanol, 3-octanol, 4-octanol, 1-dodecanol, phenol, 2-hydroxybiphenyl, 3-hydroxybiphenyl, 4-hydroxybiphenyl, 2-hydroxypyridine, 3-hydroxypyridine or 4-hydroxypyridine. Possible monofunctional amines are: butylamine, tert-butylamine, pentylamine, hexylamine, aniline, aziridine, pyrrolidine, piperidine, morpholine. The following monofunctional thiols can be used: ethanethiol, 1-propanethiol, 2-propanethiol, 1-butanethiol, 3-methyl-1-butanethiol, 2-butene-1-thiol, thiophenol. The following may be mentioned as monofunctional carboxylic acids: formic acid, acetic acid, propionic acid, butyric acid, fatty acids such as stearic acid, palmitic acid, oleic acid, linoleic acid, linolenic acid, benzoic acid, acrylic acid. Compounds from the group of glycol ethers, such as diethylene glycol monoethyl ether, are also suitable as starter compounds.

In a preferred embodiment the polymeric polyhydroxy-functional alcohols $A2_3$) are polyether polyols, polyester polyols and polycarbonate poylols. The alcohols of component $A2_3$) preferably have a hydroxyl number of 3 to 1000 mg KOH/g, preferably 14 to 1000 mg KOH/g, measured according to DIN 53240-3:2016-03. The alcohols of component $A2_3$) preferably have a number average molecular weight Mn in a range from 62 to 18 000 g/mol, particularly preferably from 62 to 4000 g/mol.

Polyester polyols can be produced analogously to the production of the polyether monools described above under component $A2_3$). The alkylene oxides described under component $A2_3$) can be used as alkylene oxides. However, to produce the polyether polyols, H-functional starter molecules with an average functionality of >1, preferably ≥1.5 and ≤6, particularly preferably ≥2 and ≤6 are used.

Suitable starter molecules are low molecular weight diols, triols such as ethanediol, diethylene glycol, triethylene glycol, tetraethylene glycol, 1,2-propanediol, dipropylene glycol, tripropylene glycol, tetrapropylene glycol, 1,3-propanediol, 1,4-butanediol, 1,3-butanediol, 2,3-butandiol, 1,5-pentanediol, 1,6-hexanediol, 2,2-dimethyl-1,3-propanediol, 1,4-dihydroxycyclohexane, 1,4-dimethylolcyclohexane, 1,8-octanediol, 1,10-decanediol, 1,12-dodecanediol or mixtures thereof, optionally with concomitant use of higher-functional polyols such as trimethylolpropane, glycerol or pentaerythritol. Cycloaliphatic and/or aromatic di-hydroxyl and polyhydroxyl compounds are naturally also possible as polyhydric alcohols for producing the polyether polyols.

Possible polyester polyols $A2_3$) are, in particular, linear polyester diols or weakly branched polyester polyols as can be produced in a known manner from aliphatic, cycloaliphatic or aromatic dicarboxylic or polycarboxylic acids, e.g. succinic, methylsuccinic, glutaric, adipic, pimelic, suberic, azelaic, sebacic, nonanedicarboxylic, decanedicarboxylic, terephthalic, isophthalic, o-phthalic, tetrahydrophthalic, hexahydrophthalic, cyclohexanedicarboxylic, maleic, fumaric, malonic or trimellitic acid, and acid anhydrides, e.g. o-phthalic, trimellite or succinic anhydride or mixtures of at least one of these, by reaction with polyhydric alcohols, e.g. ethanediol, diethylene, triethylene, tetraethylene glycol, 1,2-propanediol, dipropylene, tripropylene, tetrapropylene glycol, 1,3-propanediol, 1,4-butanediol, 1,3-butanediol, 2,3-butandiol, 1,5-pentanediol, 1,6-hexanediol, 2,2-dimethyl-1,3-propanediol, 1,4-dihydroxycyclohexane, 1,4-dimethylolcyclohexane, 1,8-octanediol, 1,10-decanediol, 1,12-dodecanediol or mixtures thereof, optionally with concomitant use of higher-functional polyols such as trimethylolpropane, glycerol or pentaerythritol. Cycloaliphatic and/or aromatic di-hydroxyl and polyhydroxyl compounds are naturally also possible as polyhydric alcohols for producing the polyester polyols. Instead of the free polycarboxylic acids, it is also possible to use the corresponding polycarboxylic anhydrides or corresponding polycarboxylic esters of lower alcohols or mixtures of at least two thereof for producing the polyesters.

The polyester polyols can of course also be homopolymers or copolymers of lactones, which are preferably obtained by molecular addition of lactones or lactone mixtures, e.g. butyrolactone, ε-caprolactone and/or methyl-ε-caprolactone, onto suitable difunctional and/or higher-functional starter molecules, e.g. the low molecular weight, polyhydric alcohols mentioned above as formative components for polyester polyols. The corresponding polymers of ε-caprolactone are preferred. Such polycaprolactone polyols are, for example, commercially available from Ingevity Corp., South Carolina, USA under the trademark CAPA®.

Possible polycarbonates polyols $A2_3$) are, for example, those which can be produced by reaction of diols such as 1,4-butanediol and/or 1,6-hexanediol with diaryl carbonates such as diphenyl carbonate, dialkyl carbonates such as dimethyl carbonate or phosgene or mixtures of at least two thereof. The hydrolysis resistance of the polyurethane dispersions can be improved by the at least partial use of polycarbonates having hydroxyl groups.

The alcohols mentioned above can be added explicitely for the purpose of forming allophanate groups or can be added as (incorporatable) solvents. The latter applies in particular to the alcohols of component $A2_1$) as well as the higher molecular weight polyethylene glycols, propylene glycols, mixed polyethylene/polypropylene glycols and their monoalkyl ethers according to component $A2_3$). "Incorporatable solvents" means that the solvents carry isocyanate-reactive groups and are incorporated into the product via these groups, in the present case via allophanate groups.

It is an important aspect of the invention that the equivalent ratio of OH-groups of component A2) to NCO-groups of components A1) and A3) is 0.05:1 to 0.25 :1. The ratio is preferably ≥ 0.05 :1 to ≤ 0.20:1, more preferably ≥ 0.05 :1 to ≤ 0.15:1.

In a preferred embodiment (embodiment I) the reaction of components A1), A2) and optionally A3) is conducted in a one stage process. The reaction can be thermally induced and/or conducted in the presence of at least one catalyst which accelerates the formation of allophanate and isocyanurate structures (component $A4_1$).

In an alternative preferred embodiment (embodiment II) the reaction of components A1), A2) and optionally A3) is conducted in a two-stage process, comprising an urethanization reaction as the first step and an allophanatization reaction and trimerization reaction as the second step.

The first step can be thermally induced and/or conducted in the presence of at least one catalyst which accelerates the formation of urethane groups (component $A4_2$).

The second step can be thermally induced and/or conducted in the presence of at least one catalyst which accelerates the formation of allophanate and isocyanurate structures (component $A4_3$).

Suitable catalysts according to component $A4_1$) are, for example, compounds of ionic structure for example with "onium" cations (ammonium, phosphonium, etc.) and nucleophilic anions such as hydroxide, alkanoate, carboxylate, heterocycles having at least one negatively charged nitrogen atom in the ring, such as azolate, imidazolate, triazolate and tetrazolate, in particular their fluorides, hydrogendifluorides, higher polyfluorides or mixtures of these (adducts of more than one equivalent of HF onto compounds containing fluoride ions), also neutral bases such as tertiary amines or phosphanes (phosphines). Preferred catalysts of components $A4_1$) are quart, ammonium hydroxides, such as benzyltrimethylammonium hydroxide, and azolates, in particular their fluorides, hydrogendifluorides, higher polyfluorides or mixtures of these, (adducts of more than one equivalent of HF onto compounds containing fluoride ions), such as 5-azaspiro[4.5]decan-5-ium fluoride hydrofluoride.

Suitable catalysts according to component $A4_2$) are usually based on metal and transition metal compounds based on aluminum, tin, zinc, titanium, manganese, bismuth or zirconium, such as dibutyltin dilaurate, bismuth neodecanoate, zinc octoate, titanium tetrabutylate or zirconium octoate, or also tertiary amines such as 1,4-diazabicyclo-[2.22.]-octane.

Suitable catalysts according to component $A4_3$) are the catalysts mentioned above under component $A4_1$). The same preferred embodiments apply.

The progress of the reaction in the process of embodiment I or II can be monitored by determining the NCO content by titrimetric means as per DIN EN ISO 11909:2007-05. On attainment of the desired NCO content ("degree of conversion") the reaction is stopped by suitable means depending on the kind of reaction and/or the use of a catalyst or not. Preferably catalysts are deactivated by addition of suitable catalyst poisons.

According to a further preferred embodiment, the reaction is taken to a point where the reaction mixture has a degree of conversion of 5 % to 40%, preferably of 10% to 30%.

"Degree of conversion " presently refers to the percentage of the isocyanate groups originally present in the starting mixture that is consumed during the reaction according to the invention. The degree of of conversion in percent can be calculated according to the following formula:

$$\text{Degree of conversion} = (\text{NCO start} - \text{NCO end}) / \text{NCO start} \times 100.$$

The reaction can be discontinued, for example, when the target degree of conversion has been reached. This degree of conversion is reached generally after a reaction time of 30 minutes to 8 hours, preferably of 1 to 6 hours.

The reaction may be terminated for example by cooling the reaction mixture to room temperature. In general, however, the reaction is ended by addition of a catalyst poison and optional subsequent brief heating of the reaction mixture to a temperature above 80°C, for example. It is also possible to use a combination of both options to terminate the reaction, i.e. by cooling the mixture to room temperature and adding a catalyst poison, wherein the catalyst poison can be added before, during or after the reaction mixture is cooled down.

Examples of suitable catalyst poisons are inorganic acids such as hydrochloric acid, phosphorous acid or phosphoric acid, acyl chlorides such as acetyl chloride, benzoyl chloride or isophthaloyl dichloride, sulfonic acids and sulfonic esters, such as methanesulfonic acid, p-toluenesulfonic acid, trifluoromethanesulfonic acid, perfluorobutane sulfonic acid, dodecylbenzenesulfonic acid, methyl and ethyl p-toluenesulfonates, monoalkyl and dialkyl phosphates such as monotridecyl phosphate, dibutyl phosphate, and dioctyl phosphate, and also silylated acids, such as trimethylsilyl methanesulfonate, trimethylsilyl trifluoromethanesulfonate, tris(trimethylsilyl) phosphate, and diethyl trimethylsilyl phosphate.

The amount of catalyst poison needed to end the reaction is dependent here on the amount of catalyst used; in general, an equivalent amount of the catalyst poison is used, based on the catalyst used at the start. Taking account, though, losses of catalyst possibly occurring during the reaction, 20 to 80 equivalent% of the catalyst poison, based on the amount of catalyst originally used, may also be sufficient to end the reaction.

As described above the alcohols of component $A2_1$) as well as the higher molecular weight polyethylene glycols, propylene glycols, mixed polyethylene/polypropylene glycols and their monoalkyl ethers according to component $A2_3$) may be used as incorporatable solvents.

In addition to or instead of these incorporatable solvents, inert solvents may be used, such as: hexane, toluene, xylene, chlorobenzene, ethyl acetate, butyl acetate, diethylene glycol dimethyl ether, dipropylene glycol dimethyl ether, ethylene glycol monomethyl ether acetate, ethylene glycol monoethyl ether acetate, diethylene glycol ethyl ether acetate, diethylene glycol butyl ether acetate, propylene glycol monomethyl ether acetate, 1-methoxypropyl-2-acetate, 3-methoxy-n-but yl acetate, propylene glycol diacetate, Acetone, methyl ethyl ketone, methyl isobutyl ketone, cyclohexanone, lactones such as ß-propiolactone, γ-butyrolactone, ε-caprolactone and ε -methylcaprolactone, but also solvents such as N-methylpyrrolidone and N-methylcaprolactam, 1,2-propylene carbonate, methylene chloride, dimethyl sulfoxide , triethyl phosphate or any mixtures of such solvents.

The reaction mixture obtained after the reaction according to embodiment I or II is referred to herein as "raw polyisocyanate composition".

Distillation step

The obtained raw polyisocyanate composition is subjected to distillation in order to at least partially remove unreacted moieties of components A1), A2) and also A3), if present. The expression "at least partially" refers to the fact that

the content of unreacted monomeric diisocyanates is/cannot be 100% removed by distillation, so that small moieties remain in the end product, i.e. the polyisocyanate compostition (see the following statements on the residual monomeric diisocyanate content under the heading "Polyisocyanate composition").

In addition to unreacted moieties of components A1), A2) and A3) other volatile constitutents, if present, such as the inert solvents, mentioned above, can be at least partially removed by the distillation step.

The distillation is preferably carried out as thin film distillation, short path distillation and/or falling film distillation, preferably in a vacuum, in one or several evaporator stages, with the one or the final evaporator stage of the several stages preferably having a pressure of less than 1.0 mbar, preferably less than 0.25 mbar, particularly preferably less than 0.2 mbar. On a production scale, the distillation is preferably carried out in several stages, with pressures of less than 30 mbar in the first stages, preferably less than 20 mbar, particularly preferably less than 10 mbar and a pressure of less than 1 mbar, preferably less than 0.25 mbar, particularly preferably less than 0.2 mbar in the last evaporator stage.

In an embodiment of the invention a catalyst poison is added to the raw polyisocyanate composition before or during the distillation is performed.

The distillation is preferably carried out at a temperature of 100 to 200°C, more preferably of 120 to 200°C.

It is possible to use different or multiple distillation methods such as thin film distillation, falling film distillation or short path distillation.

The design of the evaporator stages, evaporation units and distillation apparatus for the possible distillation methods can be chosen arbitrarily. It can be advantageous to heat these with direct steam and/or a pressurized water circuit. In addition, the evaporation units preferably contain several condensers and vacuum pumps. In a preferred embodiment, the distillation setup comprises or consists of three evaporator stages and particularly preferably comprises or consists of a falling film evaporator as the first evaporation stage, a thin film evaporator or falling film evaporator as the second evaporator stage and a short-path evaporator as the third evaporator stage.

The above described process leads to polyisocyanate compositions with a low residual monomeric diisocyanate content.

In a preferred embodiment component A) is characterized in that it has a residual monomeric diisocyanate content of diisocyanates of components A1) and A3) of less than 1 % by weight, preferably less than 0.5 % by weight and more preferably less than 0.1 % by weight, based on the total weight of the polyisocyanate composition.

The residual monomeric diisocyanate content is determined by gas chromatography in accordance with DIN EN ISO 10283:2007-11 with internal standard.

In a preferred embodiment, component A) is characterized in that it has an NCO content determined in accordance with DIN EN ISO 11909:2007-05 of from 5.8 to 21.4% by weight, preferably from 7.8 to 20.4% by weight, particularly preferably from 8.8 to 19.4% by weight, based on the total weight of component A).

In addition to the isocyanurate structures and allophanate structures polyisocyanate composition A) may also contain urethane structures and minor amounts of iminooxadiazinedione, urea, uretdione, oxadiazinetrione, carbodiimide, thiourethane, thioallophanate and/or biuret structures.

In a preferred embodiment polyisocyanate composition A) contains at least one urethane structure iminooxadiazinedione structure, urea structure, uretdione structure, oxadiazinetrione structure, carbodiimide structure, thiourethane structure, thioallophanate structure and/or biuret structure in addition to the at least one isocyanurate structure and at least one allophanate structure.

In a preferred embodiment polyisocyanate composition A) comprises, based on the total solid content of polyisocyanate composition A), ≥ 99 % by weight, preferably ≥ 99.5 % by weight and more preferably ≥ 99.9 % by weight of polyisocyanates containing at least one isocyanurate structure and at least one allophanate structure and at least one iminooxadiazinedione structure, urethane structure, urea structure, uretdione structure, oxadiazinetrione structure, carbodiimide structure, thiourethane structure, thioallophanate structure and/or biuret structure.

In a preferred embodiment of the above preferred embodiments polyisocyanate composition A) comprises an isocyanurate structure fraction of ≥ 5 to ≤ 80 mol%, preferably ≥ 20 to ≤ 75 mol%, in each case based on the total amount of isocyanurate, allophanate, iminooxadiazinedione, urethane, urea, uretdione, oxadiazinetrione, carbodiimide, thiourethane, thioallophanate and biuret structures polyisocyanate composition A).

In a preferred embodiment of the 3 preferred embodiments mentioned above polyisocyanate composition A) comprises an allophanate group fraction of ≥ 10 to ≤ 65 mol%, preferably ≥ 15 to ≤ 60 mol%, in each case based on the total amount of isocyanurate, allophanate, iminooxadiazinedione, urethane, urea, uretdione, oxadiazinetrione, carbodiimide, thiourethane, thioallophanate and biuret structures in polyisocyanate composition A).

The fraction of urethane structures is at most 50 mol% (≥ 0 to ≤ 50 mol%), preferably at most 45 mol% (≥ 0 to ≤ 45 mol%), more preferably at most 35 mol% (≥ 0 to ≤ 35 mol%), in each case based on the total amount of isocyanurate, allophanate, iminooxadiazinedione, urethane, urea, uretdione, oxadiazinetrione, carbodiimide, thiourethane, thioallophanate and biuret structures in polyisocyanate composition A).

Minor amounts of iminooxadiazinedione, urea, uretdione, oxadiazinetrione, carbodiimide, thiourethane, thioallophanate and/or biuret structures means that their total fraction is at most 10 mol% (≥ 0 to ≤ 10 mol%), preferably at most 5

mol% (≥ 0 to ≤ 5 mol%), in each case based on the total amount of isocyanurate, allophanate, iminooxadiazinedione, urethane, urea, uretdione, oxadiazinetrione, carbodiimide, thiourethane, thioallophanate and biuret structures in polyisocyanate composition A).

The fractions (mol%) of isocyanurate, allophanate, iminooxadiazinedione, urethane, urea, uretdione, oxadiazinetrione, carbodiimide, thiourethane, thioallophanate and biuret structures are determined by $^{13}C$ NMR spectroscopy. The measurements are conducted on the Bruker DPX 400 or DRX 700 instruments on approx. 50% ($^{13}C$ NMR) samples in dry $C_6D_6$, at 100 or 176 MHz ($^{13}C$ NMR). The $C_6D_5H$ present in the NMR solvent is used as reference signal (7.15 ppm, $^1H$-NMR), or the solvent signal itself (average signal of the 1:1:1 triplet at 128.0 ppm in the $^{13}C$ NMR).

The polyisocyanate compositions A) are storage stable at 24°C for at least 14 days, preferably at least 21 days, more preferably at least 28 days. Storage stable means that they show no sign of solid formation.

Component B: NCO-reactive compounds

NCO-reactive compounds of component B) may be all compounds known to those skilled in the art - including in any desired mixtures with one another - that have an average OH, NH or SH functionality of at least 1.5. These may, for example, be low molecular weight diols (e.g. ethane-1,2-diol, propane-1,3- or -1,2-diol, butane-1,4-diol), triols (e.g. glycerol, trimethylolpropane) and tetraols (e.g. pentaerythritol), short-chain polyamines, but also polyaspartic esters, polythiols and/or polyhydroxy compounds such as polyether polyols, polyester polyols, polyurethane polyols, polysiloxane polyols, polycarbonate polyols, polyether polyamines, polybutadiene polyols, polyacrylate polyols and/or polymethacrylate polyols, and the copolymers thereof, called polyacrylate polyols hereinafter.

According to a preferred embodiment, the NCO-reactive compound is a polyhydroxy compound, preferably a polyether polyol, polyester polyol, polycarbonate polyol or polyacrylate polyol.

Polyester polyols suitable as hydroxy-functional compounds include for example those having an average molecular weight calculable from functionality and hydroxyl number of 200 g/mol to 4000 g/mol, preferably of 250 g/mol to 2500 g/mol, having a hydroxyl group content of 1% to 21% by weight, preferably 2% to 18% by weight, such as are producible in a manner known per se by reacting polyhydric alcohols, for example those mentioned above having 2 to 14 carbon atoms, with deficit amounts of polybasic carboxylic acids, corresponding carboxylic anhydrides, corresponding polycarboxylic esters of lower alcohols, or lactones.

The acids or acid derivatives used for producing the polyester polyols may be aliphatic, cycloaliphatic and/or aromatic in nature and may optionally be substituted, for example by halogen atoms, and/or unsaturated. Examples of suitable acids include for example polybasic carboxylic acids in the molecular weight range 118 to 300 g/mol or derivatives thereof such as for example succinic acid, adipic acid, sebacic acid, phthalic acid, isophthalic acid, trimellitic acid, phthalic anhydride, tetrahydrophthalic acid, maleic acid, maleic anhydride, dimeric and trimeric fatty acids, dimethyl terephthalate and bisglycol terephthalate.

Production of the polyester polyols may also employ any desired mixtures of these starting compounds recited by way of example.

A type of polyester polyols alternatively employable as the hydroxy-functional compound is selected from those producible by ring opening in a manner known per se from lactones and simple polyhydric alcohols, for example those mentioned by way of example hereinabove, as starter molecules. Examples of suitable lactones for producing these polyester polyols are for example β-propiolactone, γ-butyrolactone, δ- and δ-valerolactone, ε-caprolactone, 3,5,5- and 3,3,5-trimethylcaprolactone or any desired mixtures of such lactones.

Polyhydroxyl compounds of the polycarbonate type which are suitable as hydroxy-functional compounds especially include the polycarbonate diols known per se such as are obtainable for example by reaction of dihydric alcohols, for example those recited by way of example in the above list of polyhydric alcohols in the molecular weight range 62 to 400 g/mol, with diaryl carbonates, such as for example diphenyl carbonate, dialkyl carbonates, such as for example dimethyl carbonate, or phosgene.

Suitable polyhydroxyl compounds of the polyester carbonate type which are suitable as hydroxy-functional compounds include in particular the ester- and carbonate-comprising diols that are known per se, such as are obtainable for example according to the teaching of DE-A 1 770 245 or WO 03/002630 by reacting dihydric alcohols with lactones of the type recited by way of example above, in particular ε-caprolactone and subsequent reaction of the resulting polyester diols with diphenyl carbonate or dimethyl carbonate.

Polyether polyols suitable as hydroxy-functional compounds include in particular those having an average molecular weight, calculable from functionality and hydroxyl number, of 200 to 2000 g/mol, preferably 250 to 1000 g/mol, having a hydroxyl group content of 1.6% to 25% by weight, preferably 3.6% to 20% by weight, such as are obtainable in a manner known per se by alkoxylation of suitable starter molecules. To produce these polyether polyols any desired polyhydric alcohols, such as the above-described simple polyhydric alcohols having 2 to 14 carbon atoms, may be employed as starter molecules. Suitable alkylene oxides for the alkoxylation reaction especially include ethylene oxide and propylene oxide which may be employed in the alkoxylation reaction in any sequence or else in admixture.

Suitable polyether polyols also include the polyoxytetramethylene glycols known per se, such as are obtainable for example by polymerization of tetrahydrofuran according to H. Meerwein et al., Angew. Chem. 72, 1960, 927 - 934.

Suitable polyacrylate polyols are generally copolymers and preferably have mass-average molecular weights Mw of between 1000 and 20 000 g/mol, especially between 5000 and 10 000 g/mol, measured in each case by means of gel permeation chromatography (GPC) according to DIN 55672-1:2016-03 in tetrahydrofuran at 25°C against a polystyrene standard. The glass transition temperature of the copolymers is preferably between -100°C and 100°C, especially between -50°C and 80°C (measured by means of DSC measurements according to DIN EN ISO 11357-2:2014). Suitable polyacrylate polyols preferably have an OH number of 60 to 250 mg KOH/g, especially between 70 and 200 mg KOH/g, and an acid number of between 0 and 30 mg KOH/g. The acid number here indicates the number of mg of potassium hydroxide which is used for neutralization of 1 g of the respective compound (DIN EN ISO 2114:2000).

The production of suitable polyacrylate polyols is known to those skilled in the art. They are obtained by radical polymerization of olefinically unsaturated monomers having hydroxyl groups or by radical copolymerization of olefinically unsaturated monomers having hydroxyl groups with optionally other olefinically unsaturated monomers, for example ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, amyl acrylate, amyl methacrylate, hexyl acrylate, hexyl methacrylate, ethylhexyl acrylate, ethylhexyl methacrylate, 3,3,5-trimethylhexyl acrylate, 3,3,5-trimethylhexyl methacrylate, stearyl acrylate, stearyl methacrylate, lauryl acrylate or lauryl methacrylate, cycloalkyl acrylates and/or cycloalkyl methacrylates, such as cyclopentyl acrylate, cyclopentyl methacrylate, isobornyl acrylate, isobornyl methacrylate or especially cyclohexyl acrylate and/or cyclohexyl methacrylate. Suitable olefinically unsaturated monomers having hydroxyl groups are especially 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate and especially 4-hydroxybutyl acrylate and/or 4-hydroxybutyl methacrylate.

Further monomer units used for the polyacrylate polyols may be vinylaromatic hydrocarbons, such as vinyltoluene, alpha-methylstyrene or especially styrene, amides or nitriles of acrylic acid or methacrylic acid, vinyl esters or vinyl ethers, and in minor amounts especially acrylic acid and/or methacrylic acid.

The inventive compositions optionally contain catalysts for controlling the curing rate (component C), for example the catalysts customary in isocyanate chemistry, such as tert. amines such as triethylamine, pyridine, methylpyridine, benzyldimethylamine, N,N-endoethylenepiperazine, N-methylpiperidine, pentamethyldiethylenetriamine, N,N-dimethylaminocyclohexane, N,N'-dimethylpiperazine or metal salts such as iron(III) chloride, zinc chloride, zinc 2-ethyl caproate, tin(II) octanoate, tin(II) ethyl caproate, dibutyltin(IV) dilaurate, bismuth(III )-2-ethylhexanoate, bismuth(III) octoate or molybdenum glycolate.

As can be seen from the examples the inventive compositions show fast chemical and physical drying, even without using a catalyst which catalyzes the reaction of components A) and B). In a preferred embodiment of the invention the inventive composition does not comprise any catalyst C).

Catalysts $A4_1$) to $A4_3$) which fall under the definition of component C) but are deactivated by a catalyst poison do not belong to catalysts C).

The inventive compositions optionally contain auxiliaries and additives (component D), which may for example be co-binders, desiccants, fillers, cosolvents, color or effect pigments, thickeners, matting agents, light stabilizers, coatings additives such as dispersants, thickeners, defoamers and other auxiliaries such as adhesives, fungicides, bactericides, stabilizers or inhibitors and catalysts or emulsifiers which are known to those skilled in the art.

Components A) and B) are used generally in amounts corresponding to an equivalent ratio of isocyanate groups to isocyanate-reactive groups of 2:1 to 0.5 to 1, preferably 1.5: 1 to 0.8:1, more preferably 1.1:1 to 0.9:1.

The invention also relates to the use of a polyisocyanate composition comprising at least one isocyanurate structure and at least one allophanate structure according to component A) as described above, as well as the use of the inventive compositions as described in the synthesis of coating compositions, adhesives or sealants.

The invention further relates to coating compositions, adhesives or sealants obtainable by the use of polyisocyanate compositions comprising at least one isocyanurate structure and at least one allophanate structure according to component A) as described above, as well as by the use of the inventive composition.

The coating composition, adhesive or sealant may be a one-component or a two-component system. For use in a one-component system the free isocyanate groups of component A) are at least partially deactivated ("blocked") with one or more blocking agents. "At least partially" means that at least (≥) 70 mol%, preferably at least (≥) 85 mol%, particularly preferably at least (≥) 95 mol% of the isocyanate groups are blocked with blocking agents. The at least partially deactivated isocyanate groups or the at least partially blocked polyisocyanate composition A) can be produced, for example, by allowing the polyisocyanate composition A) to react with the blocker agent. Examples of blocking agents include blocking agents of oxime, phenol, alcohol, imine, amine, carbamic acid, urea, imidazole, imide, mercaptan, active methylene, acid amide (lactam) and bisulfites.

Each of the inventive two-component and one-component system can be used as solvent-borne or waterborne

system. In this regard, typical solvents, such as those mentioned above with regard to the synthesis of component A) or water can be used.

The invention further relates to a substrate comprising a coating composition, an adhesive or a sealant obtainable as described above, wherein the coating composition, adhesive or sealant is uncured, partially cured or fully cured.

The invention further relates to a method for coating a substrate comprising the steps:

i) providing an optionally pretreated substrate,

ii) applying the inventive coating composition to the substrate, and

iii) partially or fully curing of the coating composition.

For use in step i) of the aforementioned processes according to the invention the substrates may be uncoated or coated. Examples of primers include solvent-based or aqueous primers, primer-surfacers or filler-surfacers as well as basecoats.

Suitable substrates are, for example, substrates comprising one or more materials, especially including so-called composite materials. A substrate formed from at least two materials is referred to in accordance with the invention as composite material. Suitable materials include glass, metal, paper, wood, plastics, stone and concrete.

Suitable methods of application are, for example, printing, painting, rolling, casting, dipping, fluidized bed methods and/or spraying, for example compressed air spraying, airless spraying, high rotation, electrostatic spray application (ESTA), optionally combined with hot spray application, for example hot-air spraying.

The curing in step iii) is conducted at a temperature range of ≥ 0°C to ≤ 160 °C, preferably ≥ 20°C to ≤ 80°C.

Unless stated otherwise, all number-average molecular weights given in this document are determined by GPC according to DIN EN ISO 13885-1:2021-11 using polystyrene as standard and tetrahydrofuran as eluent.

The comparative examples and examples which follow are intended to further illustrate the invention but without limiting it.

**Examples:**

All percentages, unless noted otherwise, are to be understood to mean percent by weight.

All reactions were conducted under a nitrogen atmosphere in glass apparatuses dried beforehand under reduced pressure at 150-200 °C.

Mol% data or the simple existence of the isocyanurate, iminooxadiazinedione, allophanate, urethane, urea, uretdione, oxadiazinetrione, carbodiimide, thiourethane, thioallophanate and/or biuret structure present in the polyisocyanates were determined by $^{13}C$ NMR spectroscopy and always relate, unless noted otherwise, to the sum total of the NCO conversion products. The measurements were conducted on the Bruker DPX 400 or DRX 700 instruments on approx. 50% ($^{13}C$ NMR) samples in dry $C_6D_6$, unless noted otherwise, at 100 or 176 MHz ($^{13}C$ NMR). The $C_6D_5H$ present in the NMR solvent was used as reference signal (7.15 ppm, $^1H$-NMR), or the solvent signal itself (average signal of the 1:1:1 triplet at 128.0 ppm in the $^{13}C$ NMR.

Dynamic viscosities were determined at 23 °C using the MCR 501 rheometer (from Anton Paar) in accordance with DIN EN ISO 3219:1994-10. Measurement at different shear rates ensured that Newtonian flow behavior can be assumed. Details regarding the shear rate can therefore be omitted.

The NCO content was determined by titration in accordance with DIN EN ISO 10283:2007-11.

The residual monomer content was determined by gas chromatography in accordance with DIN EN ISO 10283:2007-11 with internal standard.

**Starting materials used**

| | |
|---|---|
| HDI | Covestro Deutschland AG |
| IPDI | Covestro Deutschland AG |
| PDI | Covestro Deutschland AG |
| Setalux D A 870 BA | The acrylic polyol was obtained from Allnex GmbH (Deutschland). It has an OH number of 4.2 % (calculated on non-volatiles) and is supplied in butyl acetate. It has an equivalent weight of 575 g/eq. |

(continued)

| | |
|---|---|
| CAPA 2067 A | Polycaprolactone polyol |
| Byk 141 | Silicone defoamer from Byk Additives and Instruments GmbH, Deutschland |
| Byk 331 | Silicone defoamer from Byk Additives and Instruments GmbH, Deutschland |
| Byk 349 | Silicone defoamer from Byk Additives and Instruments GmbH, Deutschland |
| Addocat 201 | Dibutyltin dilaurate from Lanxess Deutschland GmbH |
| Tinuvin 292 | Hindered amine light stabilizer, BASF SE, Deutschland |
| Tinuvin 1130 | Hydroxyphenyl benzotriazole liquid UV absorber, BASF SE, Deutschland |
| MPA | 1-methoxypropyl-2-acetate, anhydrous, was obtained from Azelis, St. Augustin |
| Xylene | Obtained from Azelis, St. Augustin |
| Butyl acetate | Obtained from Azelis, St. Augustin |

**Characterization of application coating films**

Drying time T1, T3 and T4 were carried out according to DIN EN ISO 9117-5:2010-07.

The pendulum damping according to König was determined to DIN EN ISO 1522 DIN EN ISO 1522:2007-04 on glass plates.

Solvent resistance was tested according to DIN EN ISO 4628-1:2016-07 small amounts of each of the solvents xylene, 1-methoxypropyl-2-acetate, ethyl acetate and acetone were placed in test tubes and provided with a cottonwool pad at the opening, thus forming a solvent-saturated atmosphere within the test tubes. The test tubes were subsequently brought with the cotton pad onto the surface of the coating, where they remained for 5 minutes. After the solvent had been wiped off, the film was examined for destruction/softening/loss of adhesion and rated (0=no change, 5=film completely dissolved). The evaluations reported are those for the four solvents in the order in each case of xylene (X), 1-methoxypropyl-2-acetate (MPA), ethyl acetate (EA) and acetone (A) in the form of four successive digits.

To test the coatings towards resistance towards acid and base a cotton pad was immersed in 10% $H_2SO_4$ or 10% NaOH and then placed on top of a coating which was then covered with a small glass vial. The solution remained on the coatings for 24 h. After this time, fresh water was used to remove the acid or base solution from the coatings. The panel was then dried with paper and then the panels were examined and rated (0=no change, 5=film completely dissolved).

Viscosity increase was used to classify chemical reactivity of the formulations and was measured with a DIN cup (4 mm diameter) according to DIN EN ISO 2431.

<u>**Polyisocyanates**</u>

**Polyisocyanate 1: IDDI-flexibilized wih CAPA Polyol** (inventive)

In a 500 mL four-neck flask with septum, internal thermometer, reflux condenser and addition funnel, IDDI (198.20 g, 1.01 mol, 1.0 eq) was charged, degassed under reduced pressure and flushed with nitrogen. The mixture was heated to 60°C. The NCO value was 42.8%. Subsequently, CAPA 2067 A (79.2 g, 0.12 mol, 0.12 eq) was dosed over one hour and stirred until the NCO value of this mixture was 26.4%. Then, 1 g of catalyst (0.8% benzyltrimethylammonium hydroxide in methanol) was added dropwise, causing the mixture to heat up to 71°C. The mixture was quenched with dibutyl phosphate (0.03 g) upon reaching an NCO value of 20.8% and subsequently purified without issues by thin film distillation (150°C / 0.12 mbar). A highly viscous but flowable resin was obtained. This resin was then diluted with MPA to 80% solids content. After storage of the resin for 4 weeks at 24°C, no sign of solid formation could be observed.

| | |
|---|---|
| Isocyanurate structures : | 26 mol% |
| Allophanate structures : | 54 mol% |
| Urethan structures: | 20 mol% |
| NCO content (solid resin): | 10.0% |
| Solid content: | 80% in MPA |
| NCO content (80% MPA): | 7.7% |
| Viscosity (23°C, 80% BA): | 14000 mPas |

**Polyisocyanate 2: IDDI-flexibilized wih CAPA Polyol** (inventive)

In a 500 mL four-neck flask with septum, internal thermometer, reflux condenser and addition funnel, IDDI

(101.00 g, 0.52 mol, 1.0 eq) was charged, degassed under reduced pressure and flushed with nitrogen. The mixture was heated to 60°C. The NCO value was 42.8%. Subsequently, CAPA 2067 A (19.8 g, 0.03 mol, 0.06 eq) was dosed over one hour and stirred until the NCO value of this mixture was 33.5%. Then, 1.0 g of catalyst (0.8% benzyltrimethylammonium hydroxide in methanol) was added dropwise, causing the mixture to heat up to 68°C. The mixture was quenched with dibutyl phosphate (0.8 g) upon reaching an NCO value of 27.6% and subsequently purified without issues by thin film distillation (150°C / 0.09 mbar). A highly viscous but flowable resin was obtained. This resin was then diluted with BA to 80% solids content. After storage of the resin for 4 weeks at 24°C, no sign of solid formation could be observed.

| | |
|---|---|
| Isocyanurate structures : | 43 mol% |
| Allophanate structures : | 32 mol% |
| Urethan structures: | 25 mol% |
| NCO content (solid resin): | 11.6% |
| NCO content (80% BA): | 8.9% |
| Viscosity (23°C, 80% BA): | 15100 mPas |
| Solid content: | 80% in BA |

**Polyisocyanate 3: ISODI-flexibilized with CAPA Polyol** (inventive)

In a 500 mL four-neck flask with septum, internal thermometer, reflux condenser and addition funnel, ISODI (161.20 g, 0.82 mol, 1.0 eq) was charged, degassed under reduced pressure and flushed with nitrogen. The mixture was heated to 60°C. The NCO value was 42.8%. Subsequently, CAPA 2067 A (64.0 g, 0.09 mol, 0.12 eq) was dosed over one hour and stirred until the NCO value of this mixture was 27.6%. Then, 0.68 g of catalyst (5-azaspiro[4.5]decan-5-ium fluoride hydrofluoride in 2-ethylhexanol, 144 ppm based on active component) was added dropwise, causing the mixture to heat up to 64°C. The mixture was quenched with dibutyl phosphate (0.37 g) upon reaching an NCO value of 21.6% and subsequently purified without issues by thin film distillation (150°C / 0.09 mbar). A highly viscous but flowable resin was obtained. This resin was then diluted with BA to 80% solids content. After storage of the resin for 4 weeks at 24°C, no sign of solid formation could be observed.

| | |
|---|---|
| Isocyanurate structures : | 25 mol% |
| Allophanate structures : | 40 mol% |
| Urethan structures: | 35 mol% |
| NCO content (solid resin): | 11.4% |
| NCO content (80% BA): | 8.6% |
| Viscosity (23°C): | 4814 mPas |
| Solid content: | 80% in BA |

**Polyisocyanate 4: ISODI-allophanate with alcohol** (inventive)

In a 1000 mL four-neck flask with septum, internal thermometer, reflux condenser and addition funnel, ISODI (750.00 g, 3.82 mol, 1.0 eq) was charged, degassed under reduced pressure and flushed with nitrogen. The mixture was heated to 60°C. The NCO value was 42.8%. Subsequently, a alcohol mixture containing 24,9 g of 2-Ethylhexanol (0.05 eq) and 24,9 g of 2-Ethylhexan-1,3-diole (0.05 eq) was added and stirred till a NCO value of 37.8% was reached. After that, catalyst (5-azaspiro[4.5]decan-5-ium fluoride hydrofluoride, 24% in 2-ethylhexanol, 41 ppm on active content) was added dropwise. The mixture was quenched with dodecylbenzenesulfonic acid (40% in iPrOH) upon reaching a NCO value of 30.2% and subsequently purified by thin film distillation (140°C / 0.001 mbar). A flowable resin with the following characteristics was obtained: Resin structure ($^{13}$C-NMR) from ISODI polyisocyanates, predominantly polyisocyanurates. The mixture was dissolved in 70% BA. After storage of the resin for 4 weeks at 24°C, no sign of solid formation could be observed.

| | |
|---|---|
| Isocyanurate structures : | 71 mol% |
| Allophanate structures : | 20 mol% |
| Urethan structures: | 9 mol% |
| NCO content (solid resin): | 19.0% |
| Solid content: | 70% in BA |

(continued)

| | |
|---|---|
| NCO content (70% BA): | 12.5% |
| Viscosity (23°C, 70% BA): | 1080 mPas |

**Polyisocyanate 5** (not inventive):

An isocyanurate structures containing hexamethylene diisocyanate (HDI) polyisocyanate was prepared by catalytic trimerization of HDI in accordance with Example 11 of EP-A 330 966, with the modification that the reaction was stopped at an NCO content of the crude mixture of 40% by addition of dibutyl phosphate. Unreacted HDI was then separated off by thin-film distillation at a temperature of 130° C and a pressure of 0.2 mbar. The product had the following characteristics and composition:

| | |
|---|---|
| NCO content: | 21.7% |
| Monomeric HDI: | 0.1% |
| Viscosity (23 °C) | 3080 mPas |
| Solid content: | 100% |

**Polyisocyanate 6** (not inventive):

An isocyanurate structures containing pentamethylene diisocyanate (PDI) polyisocyanate was prepared by catalytic trimerization of PDI by the process described in WO 2016/146579 for polyisocyanate component A2). The reaction was deactivated at an NCO content of the crude mixture of 36.7% by adding an equimolar amount of dibutyl phosphate, based on the amount of catalyst used, and stirring at 80 °C for 30 minutes. Unreacted PDI was then separated off by thin-film distillation at a temperature of 140 °C and a pressure of 0.5 mbar. The product had the following characteristics and composition:

| | |
|---|---|
| NCO content: | 21.8% |
| monomeric PDI: | 0.09% |
| Viscosity (23 °C): | 9850 mPas |
| Solid content: | 100% |

**Polyisocyanate 7** (not inventive):

An isophorone diisocyanate (IPDI) polyisocyanate containing isocyanurate structures was prepared through catalytic trimerization of IPDI in accordance with Example 2 of EP-A-0 003 765. The reaction was deactivated at an NCO content of the crude mixture of 30.1% by addition of an equimolar amount of dibutyl phosphate, based on the amount of catalyst used, and stirring at 80 °C for 30 minutes. Unreacted IPDI was then separated off by thin-film distillation at a temperature of 170 °C and a pressure of 0.3 mbar, and the solid resin obtained was diluted with butyl acetate (BA). The product had the following characteristics and composition:

| | |
|---|---|
| NCO content: | 11.9% |
| monomeric IPDI: | 0.28% |
| Viscosity (23 °C) | 620 mPas |
| Solid content: | 70% |

**Polyisocyanate 8** (not inventive):

In a 500 mL four-neck flask with septum, internal thermometer, reflux condenser and addition funnel, HDI (588.00 g, 3.5 mol, 1.0 eq) was charged, degassed under reduced pressure and flushed with nitrogen. The mixture was heated to 100°C. The NCO value was 50.0%. Subsequently, CAPA 2067 A (273.00 g, 0.42 mol, 0.12 eq) was dosed over one and a half hour and stirred until the NCO value of this mixture was 29.5%. The reaction mixture was cooled down to 60°C and subsequently 4.0 g of catalyst (0.8% benzyltrimethylammonium hydroxide in 2-Ethylhexane-1,3-diol) was added dropwise in portions, causing the mixture to heat up to 71.5°C. The mixture was quenched with dibutyl phosphate (0.1 eq. to

catalyst dosage) upon reaching an NCO value of 22.7% and filtered. Subsequently excess HDI was removed by thin film distillation (130°C / 0.09 mbar).

monomeric HDI: 0.07%

Viscosity (23°C): 7.624 mPas

NCO content: 11.3%

Solid content: 100%

**Polyisocyanate 9: ISODI polyisocyanate with less than 0.05 eq alcohol** (not inventive):

In a 500 mL three-neck flask with septum, internal thermometer and reflux condenser, ISODI (239.8, 1.22 mol, 1.0 eq.) was charged and the mixture was tempered to 60°C. The NCO value of this mixture was 42.8%. Subsequently, 2-Ethylhexanol (3.77 g, 0.03 mol, 0.02 eq) was added and stirred till a NCO value of 41.2% was reached. After that, catalyst (5-azaspiro[4.5]decan-5-ium fluoride hydrofluoride, 24% in 2-ethylhexanol, 20 ppm on active content) was added dropwise. The mixture was quenched with dodecylbenzenesulfonic acid (40% in iPrOH) upon reaching an NCO value of 36.2% An attempt was then made to purify this mixture by thin film distillation (190°C / 0.19 mbar). However, it was observed that the reaction mixture is not suitable for purification by thin film distillation, as their melt viscosity is too high.

**Formulations:**

Component A: Setalux DA 870 BA was mixed with Byk 141 (delivered form), Byk 331 (10 % solution in BA, Tinuvin 292 (50 % solution in BA), and Tinuvin 1130 (50 % solution in BA). The mixture was diluted with a solution of MPA:Xylene:BA 1:1:1.

Component B: 24.43 g of Polyisocyanate 1 was diluted with 10.00 g of a solution of BA and xylene 1: 1.

Component A and B were poured into a container in an NCO to OH ratio of 1:1 and mixed by hand for 1 minute. The formulations were applied on panels depending on the test to be carried out, with a coating knife. The panels were dried at room temperature, or 30 minutes at 60 °C, or 30 minutes at 80 °C, or 30 minutes at 140 °C. The dry film thickness after curing was approximately 50 μm.

Examples are shown in Table 1 and 2, application results are shown in Tables 3 and 4:

**Table 1.** Formulation Examples 1-4:

| Component A | Solid content | Example 1 | Example 2 | Example 3 | Example 4 |
|---|---|---|---|---|---|
| Setalux DA 870 BA | 70% BA | 53,89 | 53,52 | 48,2 | 68,32 |
| Byk 141 | 100% | 0,36 | 0,36 | 0,36 | 0,36 |
| Byk 331 | 10% BA | 2,17 | 2,17 | 2,17 | 2,17 |
| Tinuvin 292 | 50% BA | 1,44 | 1,44 | 1,44 | 1,44 |
| Tinuvin 1130 | 50% BA | 2,89 | 2,89 | 2,89 | 2,89 |
| MPA/Xylol/BA 1:1:1 | | 42,16 | 46,02 | 46,69 | 34,87 |
| **Component B** | | | | | |
| Polyisocyanate 1 | 80% MPA | 43,58 | | | |
| Polyisocyanate 2 | 60% BA | | 43,93 | | |
| Polyisocyanate 3 | 80% BA | | | 48,60 | |
| Polyisocyanate 4 | 80% BA | | | | 40,3 |

**Table 2.** Formulation Examples 5-9:

| Component A | Solid content | Example 5 | Example 6 | Example 7 | Example 8 | Example 9 |
|---|---|---|---|---|---|---|
| Setalux DA 870 BA | 70% BA | 53,2 | 69,75 | 68,51 | 63,46 | 68,04 |
| Byk 141 | 100% | 0,36 | 0,36 | 0,36 | 0,36 | 0,36 |

(continued)

| Component A | Solid content | Example 5 | Example 6 | Example 7 | Example 8 | Example 9 |
|---|---|---|---|---|---|---|
| Byk 331 | 10% BA | 2,17 | 2,17 | 2,17 | 2,17 | 2,17 |
| Tinuvin 292 | 50% BA | 1,44 | 1,44 | 1,44 | 1,44 | 1,44 |
| Tinuvin 1130 | 50% BA | 2,89 | 2,89 | 2,89 | 2,89 | 2,89 |
| MPA/XylolBA 1:1:1 | | 43,8 | 47,81 | 47,88 | 37,78 | 37,78 |
| **Component B** | | | | | | |
| Polyisocyanate 5 | 100% | | 23.41 | | | 24,60 |
| Polyisocyanate 6 | 100% | | | 23.57 | | |
| Polyisocyanate 7 | 70% BA | | | | 39.73 | 10,55 |
| Polyisocyanate 8 | 100% | 44,2 | | | | |

**Table 3.** Application results / coating properties examples 1-5.

| | Example 1 | Example 2 | Example 3 | Example 4 |
|---|---|---|---|---|
| **Viscosity DIN Cup 4 mm @ r.t. (s)** | | | | |
| **0 h** | 21 | 21 | 20 | 22 |
| **2h** | 36 | 50 | 44 | 38 |
| **Drying Behaviour (min)** | | | | |
| RTT1 | 65 | 40 | 45 | 20 |
| RT T4 | 350 | 240 | 480 | 280 |
| 30 min, 60 °C T4 | direct | direct | direct | direct |
| **Hardness (s)** | | | | |
| RT 1d | 45 | 72 | 54 | 77 |
| 30 min, 60 °C 1d | 91 | 126 | 90 | 111 |
| **Solvent resistance:** (Xy/MPA/EA/Ac), 5 min test | | | | |
| RT 7d | 2244 | 1034 | 2255 | 2334 |
| 30 min, 60 °C 7d | 2244 | 1034 | 1245 | 2334 |
| Acid / Base resistance 10% $H_2SO_4$ / 10% NaOH, 30 min, 60°C, 7d, 24h test | | | | |
| r.t., 7d | 0 / 0 | 0 / 0 | 0 / 0 | 0 / 0 |
| 30, 60 °C 7d | 0 / 0 | 0 / 0 | 0 / 0 | 0 / 0 |

**Table 4.** Application results / coating properties examples 5-9:

| | Example 5 | Example 6 | Example 7 | Example 8 | Example 9 |
|---|---|---|---|---|---|
| **Viscosity DIN Cup 4 mm @ r.t. (s)** | | | | | |
| **0 h** | 19 | 17 | 17 | 19 | 18 |
| **2h** | 23 | 22 | 23 | 20 | 21 |
| **Drying Behaviour (min)** | | | | | |
| RTT1 | >480 | 70 | 60 | 30 | 45 |
| RT T4 | >480 | > 480 | >480 | 480 | >480 |
| 30 min, 60 °C T4 | >480 | 240 | 200 | direct | direct |

(continued)

| Hardness (s) | | | | | |
|---|---|---|---|---|---|
| RT 1d | <10 | 49 | 31 | 79 | 38 |
| 30 min, 60 °C 1d | <10 | 97 | 66 | 123 | 94 |
| **Solvent resistance:** (Xy/MPA/EA/Ac), 5 min test | | | | | |
| RT 7d | 4455 | 2234 | 2123 | 4455 | 2135 |
| 30 min, 60 °C 7d | 4444 | 2124 | 2123 | 3355 | 2235 |
| **Acid / Base resistance** 10% $H_2SO_4$ / 10% NaOH, 30 min, 60°C, 7d, 24h test | | | | | |
| r.t., 7d | 0 / 0 | 0 / 0 | 0 / 0 | 0 / 0 | 0 / 0 |
| 30, 60 °C 7d | 0 / 0 | 0 / 0 | 0 / 0 | 0 / 0 | 0 / 0 |

**Discussion of the results**

As visible from the data summarized in Table 3, although uncatalyzed, coating formulations based on PICs that contain isohexide diisocyanates (examples 1, 2, 3 and 4) show significantly faster chemical drying, as apparent by their viscosity increase, than coatings based on standard aliphatic PICs (examples 5 to 9).

Furthermore, they also match the state-of-the-art regarding physical drying properties of coatings containing cycloaliphatic PICs like IPDI based PICs (example 8) reaching T4 drying at room temperature within a time frame of 240 to 480 min.

A coating based on typical blend of HDI/IPDI PICs (example 9) was tested, which shows a compromise between chemical- and physical drying properties, which is however not comparable with the inventive examples neither in physical-or chemical drying speed.

Additionally, the pendulum hardness of the coatings after one day at low temperatures (r.t. and 60°C) differ significantly from each other. While coatings based on HDI and PDI polyisocyanates (examples 5 and 6) only develop low to moderate hardness one day after curing at r.t. or for 30 min at 60°C, coatings containing isohexide PICs show a significant improvement of hardness properties and are at least on a same level as PICs containing IPDI (examples 7 and 8). The coating performance regarding solvent resistance and acid/base resistance is in all cases on a high level and comparable.

The ability of isohexide PICs to speed up chemical as well as physical drying is further emphasized when comparing examples 1, 2 and 3 with example 5 (based on HDI PIC). While all of these PICs contain the same CAPA polyol, only the coatings based on example 1, 2 and 3 show overall good properties, coatings based on example 5 show very poor hardness development and low solvent resistance.

Coatings containing isohexide PICs (examples 1, 2, 3 and 4) have the clear advantage of combining the properties of fast chemical and physical drying, while still giving good performance in hardness and chemical resistance. These properties are especially crucial for low temperature curing processes.

**Claims**

**1.** Composition comprising

A) a polyisocyanate composition comprising at least one isocyanurate structure and at least one allophanate structure, obtainable or obtained by a process comprising

reacting a composition ($C_{A'}$), comprising

A1) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan,
A2) at least one alcohol with an OH-functionality of ≥ 1
and
A3) optionally at least one diisocyanate, different from the diisocyanate/s of component A1),

wherein the equivalent ratio of OH-groups of component A2) to NCO-groups of components A1) and A3) is 0.05:1 to 0.25 :1,
to form a raw polyisocyanate composition,
and subjecting the raw polyisocyanate composition to a distillation, preferably to a thin film distillation, a short path distillation and/or a falling film distillation, in order to at least partially remove unreacted moieties of components A1), A2) and A3) to obtain the polyisocyanate composition comprising at least one isocyanurate structure and at least one allophanate structure,

and
B) at least one NCO-reactive compound.

**2.** Composition according to claim 1, wherein the at least one alcohol with an OH-functionality of ≥ 1 is selected from the group consisting of

$A2_1$) monomeric alcohols with an OH-functionality of ≥ 1,
$A2_2$) polymeric alcohols with an OH-functionality of 1 and
$A2_3$) polymeric alcohols with an OH-functionality of ≥ 1.

**3.** Composition according to claim 2, wherein component $A2_1$) are compounds with a molecular weight of 32.04 g/mol to 250 g/mol, the chains of which can be saturated or unsaturated, linear or branched, aliphatic or cycloaliphatic or aromatic and preferably have 1 to 12 carbon atoms.

**4.** Composition according to claim 2, wherein component $A2_2$) are polyether monools, which preferably have a hydroxyl number of 3 to 1000 mg KOH/g, measured according to DIN 53240-3:2016-03, and/or preferably have a number average molecular weight Mn in a range from 62 to 18 000 g/mol.

**5.** Composition according to claim 2, wherein component $A2_3$) are polyether polyols, polyester polyols and polycarbonate poylols, which preferably have a hydroxyl number of 3 to 1000 mg KOH/g, measured according to DIN 53240-3:2016-03, and/or preferably have a number average molecular weight Mn in a range from 62 to 18 000 g/mol.

**6.** Composition according to any of claims 1 to 5, wherein component A) is **characterized by** a residual monomeric diisocyanate content of diisocyanates of components A) and C) of less than 1 % by weight, preferably less than 0.5 % by weight and more preferably less than 0.1 % by weight, based on the total weight of the polyisocyanate composition and determined by gas chromatography in accordance with DIN EN ISO 10283:2007-11 with internal standard.

**7.** Composition according to any of claims 1 to 6, wherein component A) is **characterized by** a NCO content of from 5.8 to 25.9% by weight, preferably from 7.8 to 24.9% by weight, particularly preferably from 9.7 to 23.9% by weight, based on the total weight of the polyisocyanate composition and determined in accordance with DIN EN ISO 11909:2007-05.

**8.** Composition according to any of claims 1 to 7, wherein the at least one NCO-reactive compound B) is selected from the group consisting of low molecular weight diols, triols and tetraols, short-chain polyamines, polyaspartic esters, polythiols, polyether polyols, polyester polyols, polyurethane polyols, polysiloxane polyols, polycarbonate polyols, polyether polyamines, polybutadiene polyols, polyacrylate polyols and polymethacrylate polyols, and the copolymers thereof.

**9.** Composition according to any of claims 1 to 8, wherein the composition comprises at least on catalyst, which catalyzes the reaction of components A) and B) (component C)).

**10.** Composition according to any of claims 1 to 8, wherein the composition does not comprise a catalyst/s, which catalyze the reaction of components A) and B).

**11.** Use of a composition according to any of claims 1 to 10 or use of a polyisocyanate composition comprising at least one isocyanurate structure and at least one allophanate structure according to component A) of any of claims 1 to 10 in the synthesis of coating compositions, adhesives or sealants.

**12.** Coating composition, adhesive or sealant obtainable by the use according to claim 11.

**13.** Use according to claim 10 or coating composition, adhesive or sealant according to claim 12, wherein the coating

composition, adhesive or sealant is a one-component or a two-component system.

**14.** Substrate comprising a coating composition, an adhesive or a sealant according to claim 12 or 13, wherein the coating composition, adhesive or sealant is uncured, partially cured or fully cured.

**15.** Method for coating a substrate comprising the steps:

i) providing an optionally pretreated substrate,
ii) applying the coating composition according to claim 12 or 13 to the substrate, and
iii) partially or fully curing of the coating composition.

Europäisches Patentamt
European Patent Office
Office européen des brevets

# EUROPEAN SEARCH REPORT

Application Number
EP 24 21 8972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 296 260 A1 (COVESTRO DEUTSCHLAND AG [DE]) 27 December 2023 (2023-12-27)<br>* paragraph [0001]; claims 1-15 *<br>* paragraphs [0077], [0079]; examples 3, 5 *<br>----- | 1-15 | INV.<br>C08G18/20<br>C08G18/28<br>C08G18/32<br>C08G18/42<br>C08G18/72<br>C08G18/73<br>C08G18/77<br>C08G18/78<br>C08G18/79 |
| A | US 2012/073472 A1 (SPYROU EMMANOUIL [DE] ET AL) 29 March 2012 (2012-03-29)<br>* paragraph [0001]; claims 1-27 *<br>* paragraph [0066] - paragraph [0074]; examples *<br>* paragraphs [0069], [0070] *<br>----- | 1-15 | |
| A | JOACHIM THIEM ET AL: "Synthesis of Novel Polyurethanes and Polyureas by Polyaddition Reactions of Dianhydrohexitol Configurated Diisocyanates", MACROMOLECULAR CHEMISTRY AND PHYSICS, WILEY-VCH VERLAG, WEINHEIM, DE, vol. 202, no. 17, 5 December 2001 (2001-12-05), pages 3410-3419, XP002587388, ISSN: 1022-1352<br>* title; abstract *<br>* schemes 1-3; page 3411 - page 3412 *<br>----- | 1-15 | TECHNICAL FIELDS SEARCHED (IPC)<br>C08G |
| A | US 2012/071577 A1 (PFEFFER JAN [DE] ET AL) 22 March 2012 (2012-03-22)<br>* paragraph [0001]; claims 1-26 *<br>* paragraph [0016] - paragraph [0020] *<br>* paragraph [0042] - paragraph [0061] *<br>----- | 1-15 | |

The present search report has been drawn up for all claims

2

| Place of search | Date of completion of the search | Examiner |
|---|---|---|
| Munich | 6 May 2025 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 21 8972

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | Publication date |
|---|---|---|---|
| EP 4296260 A1 | 27-12-2023 | CN 119278196 A | 07-01-2025 |
| | | EP 4296260 A1 | 27-12-2023 |
| | | EP 4543852 A1 | 30-04-2025 |
| | | KR 20250026185 A | 25-02-2025 |
| | | WO 2023247525 A1 | 28-12-2023 |
| US 2012073472 A1 | 29-03-2012 | CN 102471452 A | 23-05-2012 |
| | | DE 102009027395 A1 | 05-01-2011 |
| | | DE 112010002792 A5 | 20-09-2012 |
| | | US 2012073472 A1 | 29-03-2012 |
| | | WO 2011000587 A1 | 06-01-2011 |
| US 2012071577 A1 | 22-03-2012 | CN 102471450 A | 23-05-2012 |
| | | DE 102009027394 A1 | 05-01-2011 |
| | | DE 112010002789 A5 | 08-11-2012 |
| | | US 2012071577 A1 | 22-03-2012 |
| | | WO 2011000586 A1 | 06-01-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2011000587 A
- EP 0764633 A2
- DE 1770245 A
- WO 03002630 A
- WO 2016146579 A
- EP 0003765 A

### Non-patent literature cited in the description

- **LAAS et al.** *J. Prakt. Chem.*, 1994, vol. 336, 185-200
- **J. THIEM et al.** *Macromol. Chem. Phys.*, 2001, vol. 202, 3410-3419
- **H. MEERWEIN et al.** *Angew. Chem.*, 1960, vol. 72, 927-934